# EUROPÄISCHE PATENTSCHRIFT

(11) **EP 2 555 957 B1**
(45) Veröffentlichungstag und Bekanntmachung des Hinweises auf die Patenterteilung: **30.04.2014**
(21) Anmeldenummer: 11713228.2
(22) Anmeldetag: 31.03.2011
(51) Int. Cl.: B61D 17/04, B61D 17/08

(54) **AUßENWAND FÜR EINEN SCHIENENFAHRZEUG-WAGENKASTEN UND VERFAHREN ZU DESSEN HERSTELLUNG**
OUTER WALL FOR A RAILWAY VEHICLE BODY AND METHOD FOR PRODUCING SAME
PAROI EXTÉRIEURE POUR UNE CARROSSERIE DE VÉHICULE SUR RAIL ET SON PROCÉDÉ DE FABRICATION

(30) Priorität: 09.04.2010 DE 102010014962
(43) Veröffentlichungstag der Anmeldung: 13.02.2013
(73) Patentinhaber: Bombardier Transportation GmbH, 10785 Berlin (DE)
(72) Erfinder: LIESENBERG, Burkhart, 16548 Glienicke (DE); FRIEDRICH, Mario, 16761 Hennigsdorf (DE); MARGGRAF, Matthias, 16556 Hohen Neuendorf OT Borgsdorf (DE); MILBRANDT, Michael, 13467 Berlin (DE)
(74) Vertreter: Obst, Bernhard
(86) Internationale Anmeldenummer: PCT/EP2011/055040
(87) Internationale Veröffentlichungsnummer: WO 2011/124523

(56) Entgegenhaltungen:
- EP-A1- 1 057 705
- EP-A2- 1 044 795
- DE-A1-102008 048 083
- FR-A- 1 199 019
- GB-A- 994 006

## Beschreibung

Die Erfindung betrifft eine Außenwand für einen Schienenfahrzeug-Wagenkasten sowie ein Außenwandmodul für eine solche Außenwand sowie ein Verfahren zur Herstellung eines solchen Außenwandmoduls bzw. einer Außenwand eines Schienenfahrzeug-Wagenkastens und einen Schienenfahrzeug-Wagenkasten selbst.

Aus dem Stand der Technik sind Wagenkästen für Schienenfahrzeuge bekannt, die ein aus unterschiedlichen Teilen, wie beispielsweise Längsträgern, Querträgern und Säulen, gefertigtes Gerippe aufweisen, welches mit einer Außenbeblechung versehen ist, um hieraus eine Außenwand des Wagenkastens zu bilden. Im Stand der Technik sind die Wagenkästen bisher so ausgebildet, dass das Gerippe tragende Blechelemente umfasst, die ein fächerartiges Gerippe bilden. In diese Fächer werden Bleche eingefügt, die dann gemeinsam mit einzelnen Teilen des Gerippes eine Außenwand des Wagenkastens bilden. Beispielhaft ist ein solcher Wagenkasten in der DE 102008048083 A1 beschrieben. Dort ist ebenfalls beschrieben, Blechelemente aus mindestens zwei Blechteilen zu fertigen, die eine unterschiedliche Blechdicke bzw. Blechstärke aufweisen. Hierdurch soll erreicht werden, dass eine Blechstärke in Bereichen, die nur einer geringeren Belastung ausgesetzt sind, reduziert werden können und hierdurch Gewicht und Material eingespart werden können.

Ein Zusammenfügen von Blechen aneinander oder auch von Gerippeprofilen aneinander oder von Gerippeprofilen mit Blechen einer Außenbeblechung findet in der Regel so statt, dass zumindest ein teilweiser flächiger Materialüberlapp an Randbereichen der aneinander zu befestigenden Teile auftreten. Dieses führt zum einen dazu, dass in diesen Bereichen eine Materialaufdopplung auftritt, die, ohne eine höhere Festigkeit oder Steifigkeit der Außenwand zu bewirken, eine Gewichtserhöhung und Steigerung eines Materialeinsatzes bewirkt. Darüber hinaus stellen solche Uberlappungsflächen Problembereiche im Hinblick auf eine Spaltkorrosion dar. Beispielhaft sei hier auf die JP 2008238193 A, die JP 2008087546 A, WO 2008/068796 A1 oder WO 2008/068808 A1 verwiesen. Die dort beschriebenen Strukturen zeigen jeweils Befestigungen, die einen Materialüberlapp aufweisen.

Aus der DE 195 21 892 C1 ist ein Flächenelement bekannt, das in einer Differenzialbauweise aus mindestens einer Deckplatte und einer Vielzahl von diese über feste Verbindungen versteifende Stegen aufgebaut ist. Die festen Verbindungen werden an Durchstichen der Deckplatte entlang einer linienförmigen Berührungsfläche zwischen den Stegen und der Deckplatte durch thermisches Fügen von der von den Stegen abgewandten Seite der Deckplatte aus hergestellt. Nachteilig an einem solchen Verfahren ist, dass die Deckplatte bei diesem Verfahren durchbrochen wird, und so eine Oberfläche des Flächenelements nachteilig in seiner äußeren Erscheinungs- und Oberflächenbeschaffenheit beeinträchtigt wird. Außerdem sind nur punktuelle Verbindungsstellen zwischen den Stegen und der Deckplatte ausbildbar. Ferner ist in der DE 195 21 892 C1 vorgesehen, dass Flächenelemente, sofern sie in einen Wagenkasten integriert werden, an den Kanten mit einer Überlapp-Verbindung, vorzugsweise einer Nietenverbindung, mit tragenden Teilen verbunden werden.

Aus der WO 2009/092462 A1 ist ein Wagenkasten für ein Schienenfahrzeug bekannt, der aus mehreren Bauteilen besteht. Dort ist vorgesehen, dass mindestens ein Bauteil eine kastenförmige Struktur aufweist, die aus Wänden besteht, die durch Steckverbindungen verbunden sind. Die Steckverbindungen können durch Schweißpunkte gesichert werden.

Aus der DE 10 2008 048 083 A1 sind ein Schienenfahrzeug-Wagenkasten und ein Verfahren zu dessen Herstellung bekannt. Dort sind Außenwandelemente beschrieben, welche Träger aufweisen, zwischen die eine Außenwand bildende Bleche unterschiedlicher Materialstärke eingeschweißt sind. Angrenzend an die Träger sind Bleche größerer Materstärke angeschweißt. Ein solches Außenwandelement ist in so genannter Profilbauweise hergestellt.

Aus der EP 1 044 795 A2 ist ein flächenhaftes Bauelement für eine Verkleidung von Wagenkästen von Schienenfahrzeugen und ein Verfahren zur Herstellung eines solchen flächenhaften Bauelements bekannt, das wenigstens eine Aussparung besitzt, die wenigstens eine im Wesentlichen rechtwinklige Ecke aufweist. Es ist vorgesehen, dass in einem Bereich der wenigstens einen rechtwinkligen Ecke das Bauelement aus einem Material höherer Festigkeit besteht als in den übrigen Bereichen des Bauelements.

In der FR 1,119,019 ist die Herstellung eines Wagenkastens eines Schienenfahrzeugs beschrieben. Eine Außenwand wird aus steifen Blechen hergestellt, die zumindest an den vertikalen Seiten abgewinkelt sind, so dass benachbarte Bleche mit den abgewinkelten Flächen aneinander stoßen und diese über Punktschweißungen miteinander verbunden werden können. Ein Spalt zwischen den Blechen wird beispielsweise mit einer Kunststoffmasse abgedichtet. Auf einer Innenseite sind mehrfach abgewinkelte Traversen aufgesetzt, die mit einer Fläche überlappend auf der Innenseite auffiegen und über Punktschweißungen an dem steifen Blech befestigt sind.

Es ist eine Aufgabe der vorliegenden Erfindung, eine Außenwand für einen Schienenfahrzeug-Wagenkasten sowie ein Außenwandmodul für einen solchen Schienenfahrzeug-Wagenkasten zu schaffen, aus dem eine Außenwand durch Zusammenfügen mehrer Module herstellbar ist, sowie ein Verfahren hierzu zu schaffen, mit denen Außenwände und/oder Wagenkästen für Schienenfahrzeuge herstellbar sind, die eine möglichst ebene Oberflächenstruktur aufweisen sowie vorzugsweise ein möglichst geringes Gewicht sowie hohe Korrosionsbeständigkeit zeigen.

Es wird ein Außenwandmodul für einen Wagenkasten eines Schienenfahrzeuges vorgeschlagen, welches
- eine als selbsttragendes Schubfeldmodul ausgebildete Außenbeblechung,
   ○ die aus flächig ausgebildeten Blechen unterschiedlicher Eigenschaften zusammengefügt ist, wobei
   ○ die Bleche jeweils stumpf stoßend mit ihren jeweiligen Stirnseiten, die quer zur flächigen Ausdehnung der einzelnen Bleche orientiert sind, aneinander angrenzen und
   ○ über durchgehende Laserschweißnähte in der Weise zusammengefügt sind, dass die einzelnen Bleche an einer Außenseite des Schubfeldmoduls eine versatzfreie Außenfläche bilden,
   ○ die Bleche unterschiedlicher Eigenschaften erste Bleche und zweite Bleche umfassen,
   ○ die zweiten Bleche jeweils eine größere Widerstandsfähigkeit, insbesondere Festigkeit und/oder größere Materialstärke, als die ersten Bleche aufweisen und
   ○ die zweiten Bleche Bereiche der Außenbeblechung bilden, an denen im Betrieb eines Schienenfahrzeugs in einem aus dem Außenwandmodul gefertigten Wagenkasten erhöhte Spannungen auftreten,
   und
- ein aus Gerippeprofilen gebildetes Gerippe umfasst,
   ○ wobei die Gerippeprofile mit stirnseitigen Stoßkanten an einer Innenseite der Außenbeblechung über T-Stöße angrenzen und
   ○ über Laserschweißnähte befestigt sind.

Sowohl die flächig ausgedehnten Bleche der Außenbeblechung, die jeweils quer zur flächigen Ausdehnung eine nahezu konstante Materialstärke aufweisen, miteinander als auch die Gerippeprofile an den die Außenbeblechung bildenden Blechen sind jeweils ausschließlich über die Stirnseiten, d.h., jene Seitenflächen, miteinander verbunden, die eine geringstmögliche Berührungsfläche aufweisen. Eine Materialaufdopplung wird konsequent vermieden. Hierdurch kann insgesamt eine Korrosions-Anfälligkeit des Außenwandmoduls bzw. einer aus einem oder mehreren dieser Module gebildeten Außenwand eines Schienenfahrzeug-Wagenkastens deutlich reduziert werden.

Ein erfindungsgemäß hergestellter Wagenkasten eines Schienenfahrzeugs umfasst eine Seitenwand, die aus einem oder mehreren Außenwandmodulen gefertigt ist, wobei eine Seitenwand-Außenbeblechung als ein einheitlich selbsttragendes Schubfeldmodul ausgebildet ist, das sich zwischen einem Bodengestell und einem einen Seitenwandabschluss bildenden, in Längsrichtung des Wagenkastens verlaufenden Abschlussträger vorzugsweise ohne flächigen Überlapp eingefügt ist, wobei die ggf. mehreren Außenwandmodule in der Weise aneinander gefügt sind, dass die die Außenbeblechung bildenden Bleche der verschiedenen Außenwandmodule ebenfalls mit den Stirnseiten stumpfstoßend über Laserschweißnähte zusammengefügt sind, sodass die Seitenwand-Außenbeblechung als eine versatzfreie Außenfläche ausgebildet ist.

Ein Außenwandmodul bzw. eine Außenwand für einen Wagenkasten eines Schienenfahrzeugs erhält man mit einem vorgeschlagenen Verfahren, welches die Schritte umfasst: Zusammenfügen von flächig ausgebildeten Blechen unterschiedlicher Eigenschaften, insbesondere Materialstärken, zu einer als selbsttragendes Schubfeldmodul ausgebildeten Außenbeblechung, wobei die Bleche jeweils stumpfstoßend mit ihren jeweiligen Stirnseiten, die quer zur flächigen Ausdehnung der einzelnen Bleche orientiert sind, aneinander angrenzen und über durchgehende Laserschweißnähte in der Weise zusammengefügt werden, dass die einzelnen Bleche an einer Außenseite des Schubfeldmoduls eine versatzfreie Außenfläche bilden, wobei die Bleche unterschiedlicher Eigenschaften, insbesondere Materialstärken, erste Bleche und zweite Bleche umfassen, die zweiten Bleche jeweils eine größere Widerstandsfähigkeit, insbesondere Festigkeit und/oder größere Materialstärke, als die ersten Bleche aufweisen, die zweiten Bleche in Bereiche der Außenbeblechung eingefügt werden, an welchen im Betrieb des Schienenfahrzeuges in einem aus dem Außenwandmodul oder mit der Außenwand gefertigten Wagenkasten erhöhte Spannungen auftreten, und aus Gerippeprofilen ein Gerippe erstellt wird, wobei die Gerippeprofile mit stirnseitigen Stoßkanten an eine Innenseite der Außenbeblechung über T-Stöße angrenzen und über Laserschweißnähte an der Außenbeblechung befestigt werden.

Die Erfindung bietet den Vorteil, dass eine Außenwandstruktur entsteht, die in jenen Bereichen, in denen erhöhte Spannungsbelastungen auftreten, eine ausreichende Widerstandsfähigkeit oder Materialstärke aufweisen, in anderen Bereichen, in denen jedoch geringe Spannungsbelastungen auftreten, auch Bleche geringerer Widerstandsfähigkeit oder Materialstärke eingesetzt werden. Hierdurch wird eine gewichtsreduzierte und/oder unter Einsatz kostengünstigerer Materialien erzeugte Außenwand geschaffen, die jedoch hinsichtlich ihrer strukturellen Tragkraft nicht beeinträchtigt ist. Bereits im Fertigungsprozess wird eine Außenflächenstruktur geschaffen, die nur eine geringe oder gar keine zusätzliche Bearbeitung vor einem Aufbringen einer Außenlackierung bedarf. Darüber hinaus werden flächige Materialaufdopplungen vermieden, die ansonsten für eine Spaltkorrosion eine hohe Anfälligkeit aufweisen. Darüber hinaus erlaubt es eine solche Konstruktion, Bereiche, in denen erhöhte Spannungen auftreten, frei von jeglichen Fügenähten zu halten. Als flächig ausgedehnte Bleche werden hier Walzprodukte aus Metall angesehen, die quer zu einer flächigen Erstreckung eine im Wesentlichen gleiche Materialstärke aufweisen. Die Bleche weisen somit zumindest lokal zueinander im Wesentlichen planparallel orientierte Oberflächen auf. Die senkrecht oder quer zu diesen Flächen ausgebildeten Seitenflächen werden hier als Stirnflächen bezeichnet und genutzt, um die einzelnen Bleche aneinander zu fügen. Eine Anfasung insbesondere der zweiten Bleche, die eine höhere Materialstärke als jenes Blech aufweisen, mit dem sie zusammengefügt werden sollen, im Randbereich kann vorteilhaft sein, um einen Kraftfluss in der fertig gefügten Außenbeblechung zu optimieren. Hierbei ist die angefaste Seite der Innenseite der Außenbeblechung zugewandt.

Um eine möglichst störungsfreie Außenfläche der Außenbeblechung zu erhalten, sind die Laserschweißnähte, über die die flächig ausgebildeten Bleche aneinandergefügt sind bzw. werden, vorzugsweise von der Innenseite der Außenbeblechung bzw. des Schubfeldmoduls aus, ausgeführt.

Die zweiten Bleche der Außenbeblechung werden in Bereiche angeordnet bzw. bilden Bereiche, in oder an denen Funktionsöffnungskanten, insbesondere Funktionsöffnungsecken, beispielsweise Fensteröffnungsecken und/oder Türöffnungsecken ausgebildet sind und/oder sich Kanten oder Ecken von optional vorgesehenen Funktionsöffnungen, insbesondere Tür- oder Fensterausschnittsflächen, befinden. Es versteht sich, dass die zweiten Bleche auch Bereiche bilden können, die ganze Tür- oder Fensterstürze oder Fensterstiele zwischen benachbarten Fenstern oder anderen Funktionsöffnungen bilden.

Aufgrund der Tatsache, dass keinerlei Flächen mit Materialaufdopplung erzeugt werden, kann ein solches Außenwandmodul bzw. eine solche Außenwand für einen Wagenkasten auch aus Materialien hergestellt werden, die ansonsten eine nicht so hohe Korrosionsbeständigkeit aufweisen. Es ist somit beispielsweise nicht erforderlich, dass sämtliche Bleche aus nicht rostendem, d.h. hochlegiertem Stahl, hergestellt sind. Vielmehr ist bei einer bevorzugten Ausführungsform vorgesehen, dass zumindest die ersten Bleche, bevorzugt zusätzlich auch die Blechprofile des Gerippes und am Bevorzugtesten zusätzlich auch Blechprofile des Gerippes und die zweiten Bleche aus nicht hochlegierten Stählen bestehen.

Die einzelnen flächig ausgedehnten Bleche unterschiedlicher Materialstärken werden vorzugsweise mittels eines Präzisionsverfahrens zugeschnitten. Dieses erfolgt vorzugsweise über ein Laserschneidverfahren. Hierdurch ist es möglich, die einzelnen Bleche so zu fertigen, dass die aneinander stoßenden Kanten sich optimal aneinander anfügen. Die einzelnen Bleche müssen nicht notwendigerweise flach sein, sondern können auch eine Wölbung oder einen Knick aufweisen. Um eine optimale Verbindung der Stoßkanten der Gerippeprofile mit der Außenbeblechung herstellen zu können, werden die Stoßkanten der Profile so zugeschnitten, dass diese optimal an die Struktur der Innenseite der Außenbeblechung angepasst sind. Dies bedeutet, dass die Stoßkanten der Gerippeprofile mittels eines Laserschneidverfahrens so geschnitten werden, dass die Stoßkanten Ausklinkungen erhalten bzw. aufweisen, die an die sich ergebenden Versätze an der Innenseite der Außenbeblechung aufgrund der unterschiedlichen Materialstärken der Bleche der Außenbeblechung angepasst sind. Ferner wird die Stoßkante selbstverständlich auch an ggf. vorhandene Wölbungen oder Knicke der Außenbeblechung angepasst. Hierdurch wird die Möglichkeit geschaffen, auch die Gerippeprofile über durchgehende Laserschweißnähte, vorzugsweise I-Schweißnähte, mit der Außenbeblechung zu verbinden. Allgemein wird die Schweißung jeweils so durchgeführt, dass diese die Außenbeblechung nicht vollständig aufschmilzt oder durchdringt. Die T-Stöße können bei einer anderen Ausführungsform auch mit einer Kehlnaht oder zwei Kehlnähten versehen werden.

Das Gerippe, welches keine tragende Funktion, sondern lediglich eine aussteifende Funktion für die Außenwand übernimmt, wird vorzugsweise so ausgebildet, dass die Gerippeprofile, die entlang einer ersten Richtung orientiert werden, bis auf Unterbrechungen für Funktionsöffnungen einstückig in das Gerippe eingefügt werden. Vorzugsweise werden die Profile, die bei einer Seitenwand in einem Wagenkasten vertikal orientiert sind, durchgehend einstückig ausgebildet. Die hierzu quer verlaufenden horizontal ausgerichteten Profile des Gerippes werden hingegen jeweils durch die vertikal ausgerichteten Profile unterbrochen. Lediglich entlang horizontal ausgerichteter Funktionsöffnungen sind bei einer Ausführungsform die parallel zur Funktionsöffnung verlaufenden horizontalen Profile so ausgebildet, dass diese mehrere der nur durch die Funktionsöffnungen unterbrochene, vertikal verlaufenden Profile überspannen.

Es ist möglich, die Profile des Gerippes einzeln auf die Außenbeblechung aufzuspannen und zu fügen. Es kann sich aber als vorteilhaft erweisen, mehrere Einzel-Profile in einer separaten Vorrichtung vorzufügen, bevor sie als vorgefertigte Baugruppe auf die Außenbeblechung aufgelegt werden.

Während des Fügeprozesses werden die einzelnen Bleche, die die Außenbeblechung bilden, vorzugsweise in ein Hilfsgerüst oder eine Tragform eingelegt und dort für den Fügeprozess gehalten.

Um anschließend das Gerippe hieran zu befestigen oder hierauf aufzubauen, ist bei einigen Ausführungsformen vorgesehen, dass einzelne Bleche, insbesondere zweite Bleche, mit Ausnehmungen versehen werden, die sich nicht über die gesamte Materialstärke erstrecken. Die Außenfläche bleibt somit unbeschädigt erhalten. Diese Ausnehmungen, die beispielsweise in Form von Nuten, Kerben oder Schlitzen eingebracht werden können, können verwendet werden, um hierin Stoßkanten der Gerippeprofile zu führen und so eine Verbindung der Gerippeprofile mit der Außenbeblechung zu erleichtern.

Abweichend zu der eben beschriebenen Vorgehensweise können auch Gerippeteile an einzelnen Blechen der Außenbeblechung befestigt werden, bevor die Außenbeblechung des Außenwandmoduls vollständig fertig gestellt ist. Vorteile und Weiterbildungen der Erfindung wurden bereits teilweise beschrieben. Weitere Ausgestaltungen und Vorteile ergeben sich im Übrigen aus der Beschreibung einzelner Ausführungsformen der Erfindung.

Ausführungsbeispiele und weiter Merkmale der Erfindung werden unter Bezugnahme auf eine beigefügte Zeichnung beschrieben. Die einzelnen Figuren der Zeichnung zeigen:
- Fig. 1: eine schematische Darstellung einer vollständigen Außenwand eines Schienenfahrzeug-Wagenkastens, die an einem oberen Abschlussträger befestigt ist;
- Fig. 2: eine schematische Darstellung der Außenbeblechung der Außenwand nach Fig. 1;
- Fig. 3: eine schematische Darstellung eines Gerippes der Außenwand nach Fig. 1;
- Fig. 4: eine schematische Ansicht einer Außenbeblechung eines Außenwandmoduls;
- Fig. 5a - 5c: unterschiedliche Schweißnähte zum Befestigen der Gerippeprofile an der Außenbeblechung;
- Fig. 6: ein schematischer Ausschnitt einer Außenwand; und
- Fig. 7: einen Ausschnitt einer weiteren Ausführungsform einer Außenwand.

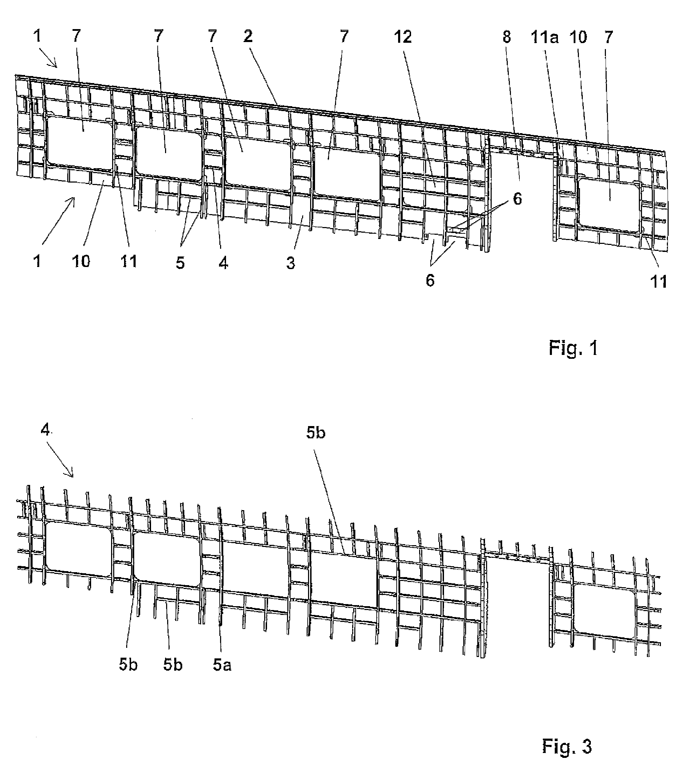

In Fig. 1 ist schematisch eine Außenwand 1 dargestellt, die an einen in Längsrichtung eines Wagenkastens eines Schienenfahrzeugs verlaufenden durchgehenden Abschlussträger 2, der als Obergurt ausgebildet ist, befestigt ist. Die Außenwand 1 umfasst eine aus Blechen unterschiedlicher Materialstärke hergestellte Außenbeblechung 3. Auf deren Innenseite, die in Fig. 1 dargestellt ist, ist ein Gerippe 4 aus Gerippeprofilen 5 befestigt. In der Außenbeblechung 3, welche an einer Außenseite (unterhalb der Zeichnungsebene) eine glatte Außenfläche bildet, sind Funktionsöffnungen 6 in Form von Fensteröffnungen 7, einer Türöffnung 8 sowie Versorgungs- und Anschlussöffnungen 9 ausgebildet. Die Außenbeblechung 3 ist als selbsttragendes Schubfeld ausgebildet. Das Gerippe 4 dient lediglich oder überwiegend zur Aussteifung dieses Schubfelds.

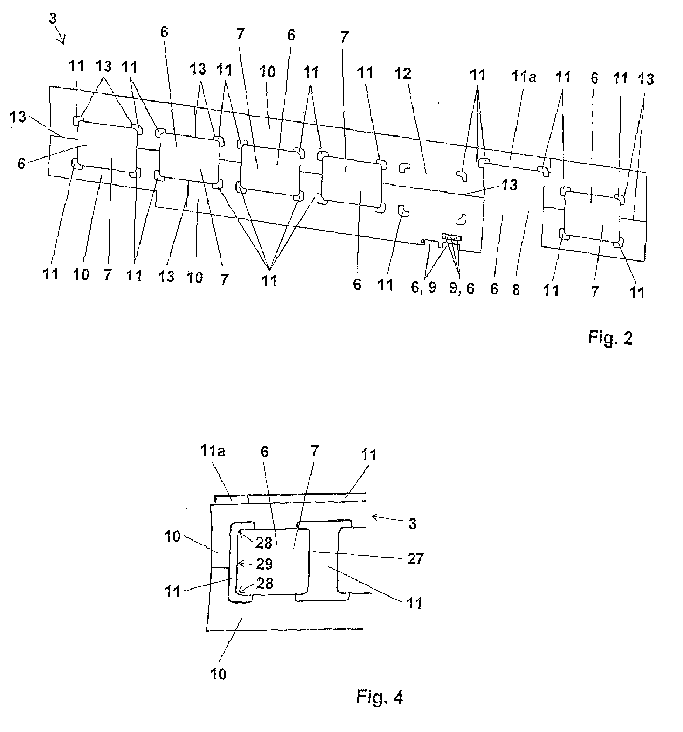

In Fig. 2 ist schematisch die Außenbeblechung der Außenwand 1 nach Fig. 1 dargestellt. Gut zu erkennen sind erste Bleche 10 einer ersten Materialstärke und zweite Bleche 11, 11a, die jeweils eine größere Materialstärke senkrecht zu ihrer flächigen Ausdehnung aufweisen als die ersten Bleche 10. Die flächige Ausdehnung der ersten Bleche 10 und zweiten Bleche 11, 11a erstreckt sich jeweils in der Zeichnungsebene. Eine Materialstärke ist somit senkrecht zur Zeichnungsebene orientiert. Zu erkennen ist, dass die zweiten Bleche 11, 11 a in jenen Bereichen der Außenbeblechung 3 angeordnet sind, an denen im Betrieb des Schienenfahrzeug-Wagenkastens besonders hohe Spannungen auftreten. Dieses sind beispielsweise die Bereiche der Außenbeblechung angrenzend an die Fensterecken und Türecken. Zusätzlich ist ein Türsturz über der Türöffnung 8 mittels eines zweiten Blechs 11a ausgebildet, welches ein zweites Blech ist, jedoch eine abweichende Materialstärke von den zweiten Blechen 11 aufweist, die an den Ecken der Türöffnung angeordnet sind. Dies bedeutet, dass zweite Bleche unterschiedlicher Materialstärken, angepasst an die jeweiligen Spannungserfordernisse des jeweiligen Bereichs, in die diese eingefügt werden, verwendet werden können. Die zweiten Bleche weisen jedoch alle eine größere Materialstärke als die ersten Bleche auf. Gut zu erkennen ist in Fig. 2 ebenfalls, dass in der Außenbeblechung bereits ein Fensterausschnittsbereich 12 vorgesehen ist, in den in die Außenbeblechung zu einem späteren Zeitpunkt, der weit nach Fertigstellung des Wagenkastens und sogar nach Inbetriebnahme des fertigen Schienenfahrzeugs liegen kann, eine Fensteröffnung eingebracht werden kann, sofern dies im Verlauf der Nutzungsdauer des Wagenkastens, in den die Außenwand eingefügt wird, gewünscht wird.

Angrenzend an die Ecken des Fensterausschnittsbereichs 12 sind ebenfalls zweite Bleche 11 in die Außenbeblechung eingefügt.

Die ersten Bleche 10 sind untereinander und mit den zweiten Blechen 11 jeweils über Laserschweißnähte 13 miteinander verbunden, an denen die einzelnen Bleche 10 stumpf aneinander anstoßen. Die Laserschweißnähte werden vorzugsweise von der Innenseite, von der aus die Seitenbeblechung in Fig. 2 dargestellt ist, ausgeführt. Auch die zweiten Bleche 11, 11a sind so vorgefertigt, dass sie stumpf aneinander anstoßen und über Laserschweißnähte 13 miteinander verbunden werden. Hierbei werden die Bleche unterschiedlicher Materialstärke 10, 11, 11 a jeweils so angeordnet, dass die Außenfläche eine versatzfreie Fläche wird. Die Innenseite hingegen weist an den Übergängen zwischen den Blechen unterschiedlicher Materialstärke 10, 11, 11 a Versätze auf. Gut zu erkennen ist in Fig. 2, dass in jenen Bereichen, in denen erhöhte Spannungen auftreten, keine Schweißnähte ausgebildet werden müssen. Hierdurch wird eine höhere Festigkeit der Außenwand bei geringerem Materialeinsatz erreicht.

In Fig. 3 ist schematisch das Gerippe 4 der Außenwand 1 nach Fig. 1 dargestellt. Das Gerippe 4 umfasst entlang einer ersten Richtung, hier einer vertikalen Richtung, orientierte Gerippeprofile 5a und entlang einer quer zur ersten Richtung orientierten zweiten Richtung verlaufende Gerippeprofile 5b. Während die entlang der ersten Richtung orientierten Gerippeprofile 5a soweit möglich einstückig ausgestaltet sind und lediglich an Funktionsöffnungen unterbrochen werden, werden die parallel zur zweiten Richtung orientierten Gerippeprofile 5b jeweils durch die vertikal orientierten Gerippeprofile 5a "unterbrochen". Dies bedeutet, dass die horizontal orientierten Gerippeprofile zwischen den senkrecht orientierten Gerippeprofilen 5a angeordnet sind. Lediglich entlang der horizontal verlaufenden Kanten der Fensteröffnungen 7 und der Türöffnung 8 überspannt jeweils ein Gerippeprofil 5b' mehrere vertikal verlaufende Gerippeprofile 5a', die an den Funktionsöffnungen unterbrochen sind. Die Gerippeprofile sind vorzugsweise als offene Blechprofile ausgebildet. Vorzugsweise kommen L-Profile, T-Profile, Z-Profile oder U-Profile zum Einsatz. Diese werden in das Gerippe so eingefügt, dass an die Außenbeblechung, an der das Gerippe zur Aussteifung der Außenbeblechung angebracht wird, lediglich "Stirnkanten" der Profile angrenzen. Dies bedeutet, dass die Seitenflächen, die als Stoßkanten der Gerippeprofile verwendet werden, um diese mit der Außenbeblechung zu verbinden und die an die Außenbeblechung angrenzen, im Wesentlichen lediglich eine Breite aufweisen, die einer Materialstärke des Blechs entspricht, aus der das jeweilige Profil gefertigt ist. Hierdurch kann erreicht werden, dass keine flächige Materialaufdopplung angrenzend an die Außenbeblechung entsteht, welches eine Korrosionsneigung für Spaltkorrosion herbeiführen würde.

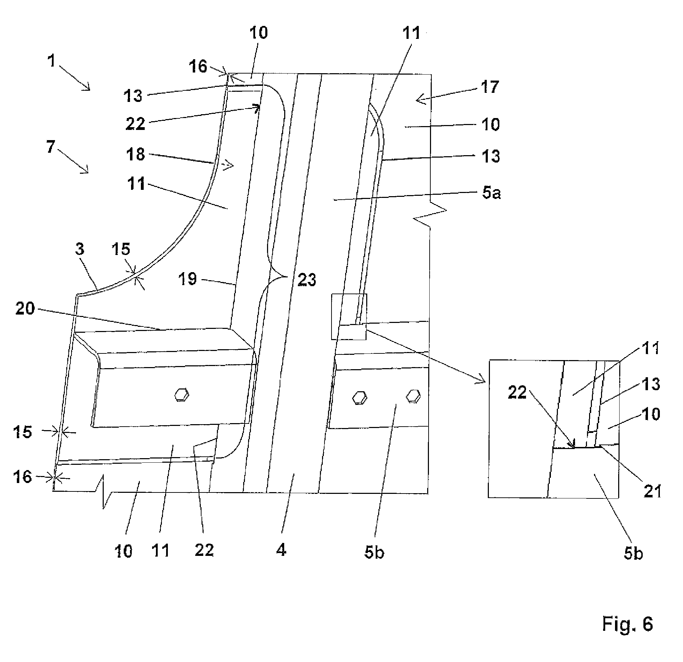

In Fig. 6 ist eine schematische Darstellung eines Ausschnitts einer Außenwand 1 bzw. eines Außenwandmoduls exemplarisch dargestellt. Exemplarisch gezeigt ist ein Ausschnitt einer als Seitenwand dienenden Außenwand im Bereich einer Ecke einer Fensteröffnung 7. Angrenzend an die Ecke ist die Außenbeblechung mittels eines zweiten Bleches 11 ausgebildet, welches eine größere Materialstärke 15 senkrecht zur flächigen Erstreckung als eine Materialstärke 16 des ersten Blechs 10 ebenfalls senkrecht zu dessen flächiger Erstreckung aufweist. Das erste Blech 10 und das zweite Blech 11 sind über eine von einer Innenseite 17 der Außenwand 1 bzw. der Außenbeblechung 3 ausgeführte Laserschweißnaht verbunden. Hierbei stoßen das erste Blech 10 und das zweite Blech 11 jeweils mit ihren Stirnseiten aneinander. Eine Außenfläche 18 der Außenbeblechung 3 ist versatzfrei ausgeführt. Hingegen ergibt sich an der Innenseite 17 am Übergang von dem ersten Blech 10 zu dem zweiten Blech 11 ein Versatz.

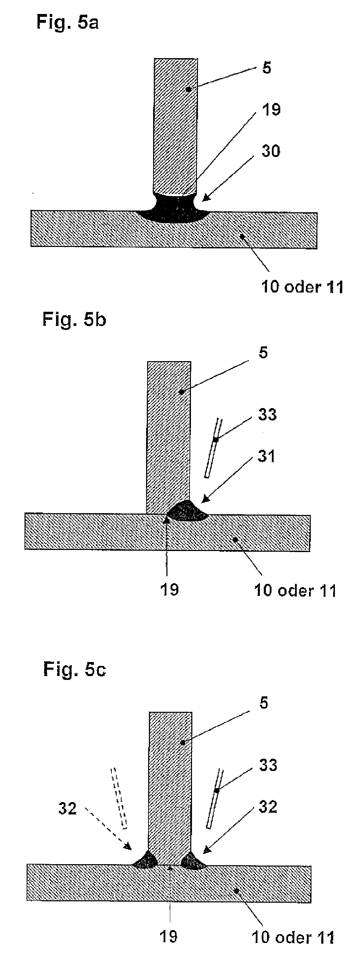

Zum Aussteifen der Außenbeblechung 3 ist mit dieser ein Gerippe 4 verbunden. Das Gerippe umfasst in dem dargestellten Ausschnitt ein vertikal durchgehend verlaufendes Gerippeprofil 5a sowie horizontal verlaufende Gerippeprofile 5b, welche durch das senkrecht verlaufende Gerippeprofil 5a unterbrochen sind. Die Gerippeprofile 5a, 5b sind jeweils als L-Profile ausgebildet und stoßen mit stirnseitigen Stoßkanten 19, 20, 21 an die Außenbeblechung jeweils mit einem T-Stoß an. Wie zu erkennen ist, weist beispielsweise die Stoßkante 19 des vertikal verlaufenden Gerippeprofils 5a eine Ausklinkung 22 in einem Bereich 23 auf, mit dem die Stoßkante 19 an das zweite Blech 11 anstößt, welches eine größere Materialstärke 15 als das erste Blech 10 aufweist. Auch die Stoßkante 20 des Gerippeprofils 5b, im rechten Teil des Ausschnitts weist eine Ausklinkung 22 auf, um einen Versatz auf der Innenseite 17 der Außenbeblechung 3 auszugleichen. Die T-Stöße der Stoßkanten 19, 20, 21 mit der Außenbeblechung 3, d.h. den ersten Blechen 10 oder den zweiten Blechen 11, kann auf unterschiedliche Weise ausgeführt werden. Dies ist beispielhaft in den Figuren 5a - 5c dargestellt.

Die in Fig. 5a dargestellte Variante stellt eine sogenannte I-Naht 30 dar. In Fig. 5b ist eine einseitige Kehlnaht 31 und in Fig. 5c eine zweiseitige Kehlnaht 32 des T-Stoßes dargestellt. Die Nähte können jeweils ohne oder mit Zuführung eines Nahtmaterials 33 ausgeführt werden und werden vorzugsweise als durchgehende Laserschweißnähte ausgeführt. Die Gerippeprofile 5, 5a können, wie hier dargestellt, Befestigungslöcher zum Befestigen von Innenverkleidungen oder ähnlichem aufweisen.

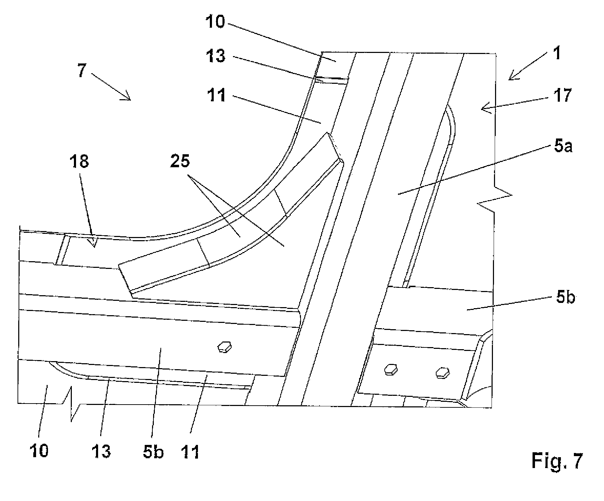

In Fig. 7 ist eine schematische Darstellung einer alternativen Ausführungsform einer Außenwand als Ausschnitt gezeigt. Diese unterscheidet sich von der in Fig. 6 gezeigten Ausführungsform lediglich dadurch, dass das Gerippe anders ausgeführt ist, beispielsweise ein zusätzliches Gerippeelement 26 zur Winkelaussteifung zwischen einem horizontal unterhalb einer der Fensteröffnung 7 verlaufenden Gerippeprofils 5b und dem vertikal verlaufenden Gerippeprofil 5a eingefügt ist. Hierdurch wird eine höhere Aussteifung des Gerippeprofils, und indirekt der Außenbeblechung 3, erreicht. Hervorzuheben ist, dass auch das zusätzlich eingefügte Gerippeelement 25 lediglich mit Stirnflächen auf die Außenbeblechung mit Stoßkanten trifft, die über Schweißnähte mit der Außenbeblechung verbunden werden können. Eine flächige Materialaufdopplung findet nicht statt.

In Fig. 4 ist ein Ausschnitt einer Außenbeblechung 3 gezeigt, bei der ein gesamter Fensterstiel 27 zwischen zwei Fensteröffnungen 7 als zweites Blech 11 ausgeführt ist. Eine gegenüber liegende Seite der vollständig gezeigten Fensteröffnung 7 weist eine Verstärkung durch ein zweites Blech 11 auf, welches die Eckbereiche 28 sowie die senkrecht verlaufende Fensterkante 29 umfasst. Auch in einem oberen Bereich der Außenbeblechung 3 sind weitere Bleche 11, 11a eingefügt.

Es ergibt sich für den Fachmann, dass die genaue Form und Anordnung der zweiten Bleche innerhalb der Außenbeblechung von den jeweiligen statischen Erfordernissen der Außenwand des Wagenkastens abhängig sind, in den diese eingefügt werden sollen. In der Figurenbeschreibung sind eine vollständige Außenwand sowie Ausschnitte hieraus gezeigt. Eine solche Außenwand kann jedoch auch als Außenwandmodul aufgefasst werden und mit gleichen oder ähnlichen Außenwandmodulen zu einer größeren Außenwand eines größeren Wagenkastens zusammengefügt werden. Vorzugsweise sind Außenwandmodule jedoch so ausgestaltet, dass sie zumindest entlang einer Richtung die vollständige Ausdehnung einer hieraus zu erstellenden Außenwand darstellen. Insbesondere ist dies die Richtung, entlang der durchgehende Gerippeprofile angeordnet werden.

Die Erfindung ist hier beispielhaft für Seitenaußenwände beschrieben. Ebenso kann die Erfindung jedoch auch für Außenwände oder Außenwandmodule verwendet werden, die in einem Dachbereich eines Wagenkastens angeordnet werden. In einer möglichen Ausführungsform wird die Außenbeblechung zwischen einem als Obergurt ausgebildeten Seitenwandabschlussträger der einen Seitenwand und einem Seitenwandabschlussträger einer gegenüber liegenden Seitenwand bündig anstoßend an diese Träger eingeschweißt. In einer alternativen Ausführungsform wird eine Außenbeblechung zwischen einem solchen Seitenwandträger und einem Mittelfirst mit den Stirnflächen bündig anstoßend an diese Träger eingeschweißt.

Weiterhin kann eine erfindungsgemäße Außenwand auch eine Stirnaußenwand (oder ein Teil davon) eines Wagenkastens sein.

Darüber hinaus soll die Erfindung so verstanden werden, dass anstelle zweiter Bleche mit einer Materialstärke, die von der der ersten Bleche abweicht, auch zweite Bleche eingesetzt werden können, die dieselbe Materialstärke wie die ersten Bleche, jedoch andere physikalische Materialeigenschaften (z.B. eine andere Verformungsfestigkeit) als die ersten Bleche aufweisen. Ebenso ist es möglich, zweite Bleche zu verwenden, die sowohl eine von den ersten Blechen abweichende Materialstärke als auch abweichende physikalische Materialeigenschaften aufweisen. Ein wesentlicher Vorteil kann dann darin bestehen, dass die Stoßkanten der Gerippeprofile beim Übergang von einem ersten auf ein zweites Blech nicht oder nur geringfügig ausgeklinkt werden müssen, da kein oder nur ein geringer Versatz zu überwinden ist.

Auch wenn dies hier nicht im Detail beschrieben ist, werden die Gerippeprofile vorzugsweise auch miteinander verbunden. Auch dieses wird vorzugsweise über Laserschweißungen ausgeführt. Auch die Gerippeprofile stoßen vorzugsweise nur mit Stirnseiten aneinander, sodass auch keine flächigen Materialaufdopplungen im Gerippe auftreten.

Während in den Figuren beispielhaft gewölbte Außenwände gezeigt sind, ist die Erfindung ohne weiteres auch auf ebene oder geknickte Außenwände oder Außenwandmodule anwendbar.

### Bezugszeichenliste

- 1: Außenwand
- 2: Abschlussträger
- 3: Außenbeblechung
- 4: Gerippe
- 5: Gerippeprofil
- 5a: Gerippeprofil (vertikal)
- 5b: Gerippeprofil (horizontal)
- 6: Funktionsöffnungen
- 7: Fensteröffnungen
- 8: Türöffnungen
- 9: Versorgungs- und Anschlussöffnungen
- 10: erste Bleche
- 11: zweite Bleche
- 11a: zweite Bleche
- 12: Fensterausschnittsbereich
- 13: Laserschweißnaht
- 15: Materialstärke zweite Bleche
- 16: Materialstärke erste Bleche
- 17: Innenseite
- 18: Außenfläche
- 19, 20, 21: Stoßkanten
- 22: Ausklinkung
- 23: Bereich
- 25: Gerippeelement zur Winkelaussteifung
- 26: Element
- 27: zweites Blech als Fensterstiel
- 28: Eckbereich
- 29: Fensterkante
- 30: I-Naht
- 31: einseitige Kehlnaht
- 32: zweiseitige Kehlnaht
- 33: Nahtmaterial

## Patentansprüche

1. Außenwandmodul eines Wagenkastens eines Schienenfahrzeugs umfassend:
eine als selbsttragendes Schubfeldmodul ausgebildete Außenbeblechung (3), die aus flächig ausgebildeten Blechen (10, 11) unterschiedlicher Elgenschaften (15, 16) zusammengefügt ist, wobei die Bleche jeweils stumpfstoßend mit ihren jeweiligen Stirnseiten, die quer zur flächigen Ausdehnung der einzelnen Bleche (10, 11) orientiert sind, aneinander angrenzen und über durchgehende Laserschweißnähte (13) in der Weise zusammengefügt sind, dass die einzelnen Bleche an einer Außenseite des Schubfeldmoduls eine versatzfreie Außenfläche (18) bilden, und die Bleche unterschiedlicher Eigenschaften erste Bleche (10) und zweite Bleche (11, 11 a) umfassen und die zweiten Bleche (11, 11 a) jeweils eine größere Widerstandsfähigkeit als die ersten Bleche (10) aufweisen, und die zweiten Bleche (11, 11a) Bereiche der Außenbeblechung (3) bilden, an denen in dem Außenwandmodul erhöhte Spannungen auftreten,
**dadurch gekennzeichnet, dass** das Außenwandmodul ferner ein aus Gerippeprofilen gebildetes Gerippe (4) umfasst, wobei die Gerippeprofile (5, 5a, 5b) mit stirnseitigen Stoßkanten (19, 20, 21) an eine Innenseite (17) der Außenbeblechung (3) über T-Stöße angrenzen und über Laserschweißnähte (13) befestigt sind.

2. Außenwandmodule nach Anspruch 1, **dadurch gekennzeichnet, dass** sich die Bleche unterschiedlicher Eigenschaften hinsichtlich ihrer Materialstärke unterscheiden und die zweiten Bleche jeweils eine größere Materialstärke als die ersten Bleche aufweisen.

3. Außenwandmodule nach Anspruch 1 oder 2, **dadurch gekennzeichnet, dass** die zweiten Bleche (11, 11a) Bereiche der Außenbeblechung (3) bilden, in oder an denen Kanten oder Ecken jeweils von Funktionsöffnungen (6) ausgebildet sind und/oder an oder in denen sich Kanten oder Ecken von vorgesehenen Funktionsöffnungen befinden.

4. Außenwandmodule nach einem der Ansprüche 1 bis 3, **dadurch gekennzeichnet, dass** zumindest die ersten Bleche (10), bevorzugt zusätzlich auch die Gerippeprofile (5, 5a, 5b) des Gerippes (4) und am Bevorzugtesten zusätzlich auch die Gerippeprofile (5, 5a, 5b) des Gerippes (4) und die zweiten Bleche (11, 11a) aus nicht hochlegierten Stählen bestehen.

5. Außenwandmodule nach einem der Ansprüche 2 bis 4, **dadurch gekennzeichnet, dass** die Stoßkanten (19, 20, 21) der Gerippeprofile (5, 5a, 5b) Ausklinkungen (22) aufweisen, die an die sich ergebenden Versätze an der Innenseite (17) der Außenbeblechung (3) aufgrund der unterschiedlichen Materialstärken (15, 16) der Bleche (10, 11) derAußenbeblechung (3) angepasst sind.

6. Wagenkasten eines Schienenfahrzeugs umfassend mindestens eine Seiten-, Dach- oder Stirnwand oder mindestens ein Seitenwand-, Dach- oder Stirnwandmodul, die bzw. das aus einem oder mehreren Außenwandmodulen gemäß einem der Ansprüche 1 bis 5 gefertigt ist, wobei eine Außenwandaußenbeblechung als ein einheitliches selbsttragendes Schubfeldmodul in der Weise ausgebildet ist, dass die die Außenbeblechung (3) bildenden Bleche (10, 11) und/oder die jeweils aneinander gefügten Außenwandmodule mit den Stirnseiten stumpfstoßend über Laserschweißnähte (13) zusammengefügt sind, sodass eine Außenfläche der Außenwandaußenbeblechung versatzfrei aus den flächig ausgebildeten ersten Blechen (10) und den flächig ausgebildeten zweiten Blechen (11, 11a) ausgebildet ist.

7. Wagenkasten eines Schienenfahrzeugs nach Anspruch 6, **dadurch gekennzeichnet, dass** die Seitenwand, die aus einem oder mehreren Außenwandmodulen gemäß einem der Ansprüche 1 bis 5 gefertigt ist, eine als ein einheitliches selbsttragendes Schubfeldmodul ausgebildete Seitenwandaußenbeblechung umfasst, wobei das Schubfeldmodul zwischen einem Bodengestell und einem einen Seitenwandabschluss bildenden, in Längsrichtung des Wagenkastens verlaufenden Abschlussträger (2) eingefügt ist, wobei die gegebenenfalls mehreren Außenwandmodule in der Weise aneinandergefügt sind, dass die die Außenbeblechung (3) bildenden Bleche (10, 11) der jeweils aneinander gefügten Außenwandmodule ebenfalls mit den Stirnseiten stumpfstoßend über Laserschweißnähte (13) zusammengefügt sind, sodass eine Außenfläche der Seitenwandaußenbeblechung versatzfrei aus den flächig ausgebildeten ersten Blechen(10) und den flächig ausgebildeten zweiten Blechen (11, 11a) ausgebildet ist.

8. Wagenkasten nach Anspruch 6 oder 7, **dadurch gekennzeichnet, dass** die Gerippeprofile (5, 5a, 5b) der Seitenwand, die entlang einer ersten Richtung orientiert sind, bis auf Unterbrechungen für Funktionsöffnungen einstückig ausgebildet sind.

9. Verfahren zum Herstellen eines Außenwandmoduls oder einer Außenwand (1) für einen Wagenkasten eines Schienenfahrzeugs umfassend die Schritte:
Zusammenfügen von flächig ausgebildeten Blechen (10, 11) unterschiedlicher Eigenschaften (15, 16) zu einer als selbsttragendes Schubfeldmodul ausgebildeten Außenbeblechung (3), wobei die Bleche (10, 11) jeweils stumpfstoßend mit ihren jeweiligen Stirnseiten, die quer zur flächigen Ausdehnung der einzelnen, Bleche (10, 11) orientiert sind, aneinander angrenzen und über durchgehende Laserschweißnähte (13) in der Weise zusammengefügt werden, das die einzelnen Bleche an einer Außenseite des Schubfeldmoduls eine versatzfreie Außenfläche (18) bilden, wobei die Bleche (10, 11) unterschiedlicher Eigenschaften (15, 16) erste Bleche (10) und zweite Bleche (11, 11a) umfassen und die zweiten Bleche (11) jeweils eine größere Widerstandsfähigkeit als die ersten Bleche (10) aufweisen, und die zweiten Bleche (11) in Bereichen der Außenbeblechung (3) eingefügt werden, an denen in dem Außenwandmodul erhöhte Spannungen auftreten,
**dadurch gekennzeichnet, dass**
das Herstellen ferner ein Erstellen eines Gerippes (4) aus Gerippeprofilen (5) umfasst, wobei die Gerippeprofile (5) mit stirnseitigen Stoßkanten (19, 20, 21) an eine Innenseite (17) der Außenbeblechung (3) über T-Stöße angrenzen und über Laserschweißnähte (13) an der Außenbeblechung (3) befestigt werden.

10. Verfahren nach Anspruch 9, **dadurch gekennzeichnet, dass** sich die Bleche unterschiedlicher Eigenschaften hinsichtlich ihrer Materialstärke unterscheiden und die zweiten Bleche jeweils mit einer größeren Materialstärke als die ersten Bleche ausgewählt werden.

11. Verfahren nach Anspruch 10, **dadurch gekennzeichnet, dass** die Stoßkanten (19, 20, 21) der Gerippeprofile (5, 5a, 5b) mittels eines Laserschneidverfahrens so geschnitten werden, dass die Stoßkanten (19, 20, 21) Ausklinkungen (22) erhalten, die an die sich ergebenden Versätze an der Innenseite (17) der Außenbeblechung (3) aufgrund der unterschiedlichen Materialstärken (15, 16) der Bleche (10, 11) der Außenbeblechung (3) angepasst sind.

12. Verfahren nach einem der Ansprüche 9 bis 11, **dadurch gekennzeichnet, dass** die Gerippeprofile (5, 5a, 5b) der Seitenwand, die entlang einer ersten Richtung orientiert werden, bis auf Unterbrechungen für Funktionsöffnungen (6) einstückig in das Gerippe (4) eingefügt werden.

13. Verfahren zum Herstellen eines Wagenkastens eines Schienenfahrzeugs umfassend die Verfahrensschritte zum Herstellen der Außenwand oder der Außenwandmodule, die aus einem oder mehreren Außenwandmodulen gemäß einem der Ansprüche 9 bis 12 gefertigt wird, wobei die Seitenwandaußenbeblechung als ein einheitliches, selbsttragendes Schubfeldmodul ausgebildet ist und wobei die aus einem oder mehreren Außenwandmodulen hergestellte Außenwand zwischen ein Bodengestell und einen einen Seitenwandabschluss bildenden, in Längsrichtung des Wagenkastens verlaufenden Abschlussträger (2) ohne flächigen Überlapp eingefügt wird und wobei die gegebenenfalls mehreren Außenwandmodule in der Weise aneinandergefügt werden, dass die die Außenbeblechung (3) bildenden Bleche (10, 11) der Außenwandmodule ebenfalls mit den Stirnseiten stumpfstoßend über Laserschweißnähte (13) zusammengefügt werden, so dass die Außenfläche der Seitenwandaußenbebtechung versatzfrei ausgebildet wird.

## Claims

1. Outer wall module of a carriage body of a rail vehicle comprising: an outer panelling (3) formed as a self-supporting shear panel module, said outer panelling (3) being assembled from flatly formed sheets of metal (10,11) with different properties (15, 16), wherein the sheets of metal are each adjoined to one another at their respective end sides, which are orientated transversely to the flat dimensions of the individual sheets of metal (10,11), using butt joints and are assembled via continuous laser-welded seams (13) in such a way that the individual sheets of metal form an offset-free outer surface (18) on an outer side of the shear panel module, and the sheets of metal with different properties comprise first sheets of metal (10) and second sheets of metal (11, 11a) and the second sheets of metal (11, 11a) each have a greater resistance than the first sheets of metal (10), and the second sheets of metal (11, 11a) form regions of the outer panelling (3), on which appear increased tensions in the outer wall module,
**characterised in that**, furthermore, the outer wall module comprises a framework structure (4) formed from framework profiles, wherein the framework profiles (5, 5a, 5b) with their end-side weld edges (19, 20, 21) are joined to an inner side (17) of the outer panelling (3) using T-joints and are attached via laser-welded seams (13).

2. Outer wall modules according to claim 1, **characterised in that** the sheets of metal with different properties differ with regard to their material thickness and the second sheets of metal each have a greater material thickness than the first sheets of metal.

3. Outer wall modules according to claim 1 or 2, **characterised in that** the second sheets of metal (11, 11a) form regions of the outer panelling (3), in or on which edges or corners of function openings (6) are formed respectively and/or on or in which edges or corners of intended function openings are situated.

4. Outer wall modules according to one of claims 1 to 3, **characterised in that** at least the first sheets of metal (10), preferably additionally also the framework profiles (5, 5a, 5b) of the framework structure (4) and most preferably additionally also the framework profiles (5, 5a, 5b) of the framework structure (4) and the second sheets of metal (11, 11a), consist of non-high-alloyed steels.

5. Outer wall modules according to one of claims 2 to 4, **characterised in that** the weld edges (19, 20, 21) of the framework profiles (5, 5a, 5b) have notches (22), which are adjusted to the resulting offsets on the inner side (17) of the outer panelling (3) due to the different material thicknesses (15, 16) of the sheets of metal (10, 11) of the outer panelling (3).

6. Carriage body of a rail vehicle comprising at least one side, roof or end wall or at least on side wall, roof or end wall module which is produced from one or several outer wall modules according to one of claims 1 to 5, wherein an outer wall outer panelling is formed as a uniform, self-supporting shear panel module in such a way that the sheets of metal (10, 11) forming the outer panelling (3) and/or the outer wall modules, which are joined to one another respectively, are joined at the end sides using butt joints via laser-welded seams, such that an outer surface of the outer wall outer panelling is formed in an offset-free manner from the flatly formed first sheets of metal (10) and the flatly formed second sheets of metal (11, 11a).

7. Carriage body of a rail vehicle according to claim 6, **characterised in that** the side wall, which is produced from one or several outer wall modules according to one of claims 1 to 5, comprises a side wall outer panelling formed as a uniform, self-supporting shear panel module, wherein the shear panel module is inserted between a floor rack and an end beam (2), which forms a side wall end and runs in the longitudinal direction of the carriage body, wherein the potential several outer wall modules are joined to one another in such a way that the sheets of metal (10, 11) forming the outer panelling (3) of the respective joined outer wall modules are likewise joined at the end sides using butt joints via laser-welded seams (13), such that an outer surface of the side wall outer panelling is formed in an offset-free manner from the flatly formed first sheets of metal (10) and the flatly formed second sheets of metal (11, 11a).

8. Carriage body according to claim 6 or 7, **characterised in that** the framework profiles (5, 5a, 5b) of the side wall, which are orientated along a first direction, are formed in one piece except for the breaks for function openings.

9. Method for producing an outer wall module or an outer wall (1) for a carriage body of a rail vehicle comprising the steps: joining flatly formed sheets of metal (10, 11) with different properties (15, 16) to an outer panelling (3) formed as a self-supporting shear panel module, wherein the sheets of metal (10, 11) are each adjoined to one another at their respective end sides, which are orientated transversely to the flat dimensions of the individual sheets of metal (10, 11), using butt joints and are joined via continuous laser-welded seams (13) in such a way that the individual sheets of metal form an offset-free outer surface (18) on the outer side of the shear panel module, wherein the sheets of metal (10, 11) with different properties (15, 16) comprise first sheets of metal (10) and second sheets of metal (11, 11a) and the second sheets of metal (11) each have a greater resistance than the first sheets of metal (10), and the second sheets of metal (11) are inserted in the regions of the outer panelling (3), on which appear increased tensions in the outer wall module,
**characterised in that**,
furthermore, the production comprises the creation of a framework structure (4) from framework profiles (5), wherein the framework profiles (5) with their end-side welding edges (19, 20, 21) are joined to an inner side (17) of the outer panelling (3) using T-joints and are attached on the outer panelling (3) via laser-welded seams (13).

10. Method according to claim 9, **characterised in that** the sheets of metal with different properties differ with regard to their material thickness and the second sheets of metal are each selected with a greater material thickness than the first sheets of metal.

11. Method according to claim 10, **characterised in that** the welding edges (19, 20, 21) of the framework profiles (5, 5a, 5b) are cut by means of a laser-cutting process such that the welding edges (19, 20, 21) obtain notches (22), which are adjusted to the occurring offsets on the inner side (17) of the outer panelling (3) due to the different material thicknesses (15, 16) of the sheets of metal (10, 11) of the outer panelling (3).

12. Method according to one of claims 9 to 11, **characterised in that** the framework profiles (5, 5a, 5b) of the side wall, which are orientated along a first direction, are inserted into the framework structure (4) in one piece except for the breaks for function openings (6).

13. Method for producing a carriage body of a rail vehicle comprising the method steps to produce the outer wall or the outer wall modules, which are produced from one or several outer wall modules according to one of claims 9 to 12, wherein the side wall outer panelling is formed as a uniform, self-supporting shear panel module and wherein the outer wall produced from one or several outer wall modules is inserted between a floor rack and an end beam (2), which forms a side wall end and runs in the longitudinal direction of the carriage body, without flat overlap and wherein the potential several outer wall modules are joined to one another in such a way that the sheets of metal (10, 11) of the outer wall module forming the outer panelling (3) are likewise joined at the end sides using butt joints via laser-welded seams (13), such that the outer surface of the side wall outer panelling is formed in an offset-free manner.

## Revendications

1. Module de paroi extérieure pour une caisse d'un véhicule ferroviaire, comprenant :
une tôlerie extérieure (3) réalisée sous la forme d'un module de panneau de cisaillement autoporteur, laquelle est constituée d'un assemblage de tôles (10, 11) réalisées de manière plane et présentant diverses caractéristiques (15, 16), sachant que les tôles sont adjacentes les unes aux autres en s'aboutant respectivement par leurs faces frontales respectives, qui sont orientées de manière transversale par rapport à l'extension plane des diverses tôles (10, 11), et qui sont assemblées par l'intermédiaire de cordons de soudure au laser (13) continus de telle manière que les diverses tôles forment, au niveau d'une face extérieure du module de panneau de cisaillement, une face extérieure (18) sans décalage, et que les tôles présentant diverses caractéristiques comportent des premières tôles (10) et des deuxièmes tôles (11, 11a), et que les deuxièmes tôles (11, 11a) présentent respectivement une résistance plus élevée que les premières tôles (10), et que les deuxièmes tôles (11, 11a) forment des zones de la tôlerie extérieure (3), au niveau desquelles apparaissent, dans le module de paroi extérieure, des tensions élevées,
**caractérisé en ce que** le module de paroi extérieure comporte en outre une ossature (4) formée à partir de profilés d'ossature, sachant que les profilés d'ossature (5, 5a, 5b) sont, par des bords de joint (19, 20, 21) côté frontal, adjacents à une face intérieure (17) de la tôlerie extérieure (3) par l'intermédiaire de joints en T et sont fixés à cette dernière par l'intermédiaire de cordons de soudure au laser (13).

2. Module de paroi extérieure selon la revendication 1, **caractérisé en ce que** les tôles présentant diverses caractéristiques se distinguent les unes des autres concernant leur épaisseur de matériau, et **en ce que** les deuxièmes tôles présentent respectivement une épaisseur de matériau plus grande que celle des premières tôles.

3. Module de paroi extérieure selon la revendication 1 ou 2, **caractérisé en ce que** les deuxièmes tôles (11, 11a) forment des zones de la tôlerie extérieure (3), dans lesquelles ou au niveau desquelles des bords ou des coins respectifs d'ouvertures fonctionnelles (6) sont réalisés et/ou au niveau desquelles ou dans lesquelles se trouvent des bords ou des coins d'ouvertures fonctionnelles prévues.

4. Module de paroi extérieure selon l'une quelconque des revendications 1 à 3, **caractérisé en ce qu'**au moins les premières tôles (10), de préférence en complément également les profilés d'ossature (5, 5a, 5b) de l'ossature (4) et de manière idéale en complément également les profilés d'ossature (5, 5a, 5b) de l'ossature (4) et les deuxièmes tôles (11, 11a) sont constitués d'aciers qui ne sont pas fortement alliés.

5. Module de paroi extérieure selon l'une quelconque des revendications 2 à 4, **caractérisé en ce que** les bords de joint (19, 20, 21) des profilés d'ossature (5, 5a, 5b) présentent des encoches (22), qui sont adaptées aux décalages résultant au niveau de la face intérieure (17) de la tôlerie extérieure (3) du fait des différentes épaisseurs de matériau (15, 16) des tôles (10, 11) de la tôlerie extérieure (3).

6. Caisse d'un véhicule ferroviaire, comprenant au moins une paroi latérale, une paroi de toit ou une paroi frontale ou au moins un module de paroi latérale, un module de paroi de toit ou un module de paroi frontale, laquelle paroi ou lequel module est fabriqué(e) à partir d'un ou de plusieurs modules de paroi extérieure selon l'une quelconque des revendications 1 à 5, sachant qu'une tôlerie extérieure de paroi extérieure est réalisée sous la forme d'un module de panneau de cisaillement uniforme autoporteur de telle manière que les tôles (10, 11) formant la tôlerie extérieure (3) et/ou les modules de paroi extérieure respectivement assemblés les uns aux autres sont rassemblés par l'intermédiaire de cordons de soudure au laser (13) en s'aboutant par les faces frontales de sorte qu'une face extérieure de la tôlerie extérieure de paroi extérieure est réalisée sans décalage à partir des premières tôles (10) réalisées de manière plane et des deuxièmes tôles (11, 11a) réalisées de manière plane.

7. Caisse d'un véhicule ferroviaire selon la revendication 6, **caractérisée en ce que** la paroi latérale, qui est fabriquée à partir d'un ou de plusieurs modules de paroi extérieure selon l'une quelconque des revendications 1 à 5, comporte une tôlerie extérieure de paroi latérale réalisée sous la forme d'un module de panneau de cisaillement uniforme autoporteur, sachant que le module de panneau de cisaillement est inséré entre un châssis de sol et un support terminal (2) formant une terminaison de paroi latérale, s'étendant dans la direction longitudinale de la caisse, sachant que les éventuels nombreux modules de paroi extérieure sont assemblés les uns contre les autres de telle manière que les tôles (10, 11), formant la tôlerie extérieure (3), des modules de paroi extérieure respectivement assemblés les uns contre les autres sont rassemblées par l'intermédiaire de cordons de soudure au laser (13) également en s'aboutant par les faces frontales, de sorte qu'une face extérieure de la tôlerie extérieure de paroi latérale est réalisée sans décalage à partir des premières tôles (10) réalisées de manière plane et à partir des deuxièmes tôles (11, 11a) réalisées de manière plane.

8. Caisse selon la revendication 6 ou 7, **caractérisée en ce que** les profilés d'ossature (5, 5a, 5b) de la paroi latérale, qui sont orientés le long d'une première direction, sont réalisés d'un seul tenant à l'exception des interruptions pour des ouvertures fonctionnelles.

9. Procédé de fabrication d'un module de paroi extérieure ou d'une paroi extérieure (1) pour une caisse d'un véhicule ferroviaire, comprenant les étapes suivantes consistant à : assembler des tôles (10, 11) réalisées de manière plane et présentant diverses caractéristiques (15, 16) pour former une tôlerie extérieure (3) réalisée sous la forme d'un module de panneau de cisaillement autoporteur, sachant que les tôles (10, 11) sont adjacentes les unes aux autres en s'aboutant respectivement par leurs faces frontales respectives, qui sont orientées de manière transversale par rapport à l'extension plane des diverses tôles (10, 11) et qu'elles sont assemblées par l'intermédiaire de cordons de soudure au laser (13) continus de telle manière que les diverses tôles forment au niveau d'une face extérieure du module de panneau de cisaillement une face extérieure (18) sans décalage, sachant que les tôles (10, 11) présentant diverses caractéristiques (15, 16) comportent des premières tôles (10) et des deuxièmes tôles (11, 11a) et que les deuxièmes tôles (11) présentent respectivement une plus grande résistance que les premières tôles (10), et que les deuxièmes tôles (11) sont insérées dans des zones de la tôlerie extérieure (3), au niveau desquelles des tensions plus élevées apparaissent dans le module de paroi extérieure,
**caractérisé en ce que**
la fabrication comporte en outre une étape consistant à mettre au point une ossature (4) à partir de profilés d'ossature (5), sachant que les profilés d'ossature (5) sont adjacents par des bords de joint (19, 20, 21) côté frontal, à une face intérieure (17) de la tôlerie extérieure (3) par l'intermédiaire de joints en T et sont fixés à la tôlerie extérieure (3) par l'intermédiaire de cordons de soudure au laser (13).

10. Procédé selon la revendication 9, **caractérisé en ce que** les tôles présentant diverses caractéristiques se distinguent les unes des autres concernant leur épaisseur de matériau, et **en ce que** les deuxièmes tôles sont choisies respectivement avec une épaisseur de matériau plus grande que celle des premières tôles.

11. Procédé selon la revendication 10, **caractérisé en ce que** les bords de joint (19, 20, 21) des profilés d'ossature (5, 5a, 5b) sont découpés au moyen d'un procédé de découpe au laser de sorte que les bords de joint (19, 20, 21) se voient dotés d'encoches (22), qui sont adaptées aux décalages résultant au niveau de la face intérieure (17) de la tôlerie extérieure (3) du fait des différentes épaisseurs de matériau (15, 16) des tôles (10, 11) de la tôlerie extérieure (3).

12. Procédé selon l'une quelconque des revendications 9 à 11, **caractérisé en ce que** les profilés d'ossature (5, 5a, 5b), de la paroi latérale, lesquels sont orientés le long d'une première direction, sont insérés dans l'ossature (4) d'un seul tenant à l'exception des interruptions pour les ouvertures fonctionnelles (6).

13. Procédé de fabrication d'une caisse d'un véhicule ferroviaire, comprenant les étapes de procédé consistant à fabriquer la paroi extérieure ou les modules de paroi extérieure, qui sont fabriqués à partir d'un ou de plusieurs modules de paroi extérieure selon l'une quelconque des revendications 9 à 12, sachant que la tôlerie extérieure de paroi latérale est réalisée sous la forme d'un module de panneau de cisaillement uniforme autoporteur et sachant que la paroi extérieure fabriquée à partir d'un ou de plusieurs modules de paroi extérieure est insérée entre le châssis de sol et un support terminal (2) formant une terminaison de paroi latérale, s'étendant dans la direction longitudinale de la caisse, sans chevauchement à plat, et sachant que les éventuels nombreux modules de paroi extérieure sont assemblés les uns aux autres de telle manière que les tôles (10, 11), formant la tôlerie extérieure (3), des modules de paroi extérieure sont assemblées par l'intermédiaire de cordons de soudure au laser (13) en s'aboutant également par les faces frontales de sorte que la face extérieure de la tôlerie extérieure de paroi latérale est réalisée sans décalage.
